Europäisches Patentamt

European Patent Office

Office européen des brevets

(19)

(11) Veröffentlichungsnummer: **0 300 994**
**B1**

(12) **EUROPÄISCHE PATENTSCHRIFT**

(45) Veröffentlichungstag der Patentschrift: **23.01.91**

(51) Int. Cl.⁵: **F 04 B 39/10, F 16 K 15/08**

(21) Anmeldenummer: **88890190.7**

(22) Anmeldetag: **19.07.88**

(54) **Kompressorventil.**

(30) Priorität: **20.07.87 US 75727**

(43) Veröffentlichungstag der Anmeldung:
**25.01.89 Patentblatt 89/04**

(45) Bekanntmachung des Hinweises auf die
Patenterteilung:
**23.01.91 Patentblatt 91/04**

(84) Benannte Vertragsstaaten:
**DE FR GB IT**

(56) Entgegenhaltungen:
**AT-B- 225 337**
**AT-B- 325 189**
**DD-A- 39 139**
**FR-A-1 061 785**
**US-A- 402 647**
**US-A-3 550 616**
**US-A-3 703 912**
**US-A-4 290 455**
**US-A-4 580 604**

(73) Patentinhaber: **ENFO Grundlagenforschungs AG**
**Aaretalstrasse 15**
**CH-5312 Döttingen (CH)**

(72) Erfinder: **Tuymer, Walter J.**
**9285 N.W. 16th Street**
**Coral Springs, FL 33071 (US)**

(74) Vertreter: **Klein, Adam, Dipl.Ing.**
**Fasangasse 49**
**A-1030 Wien (AT)**

Courier Press, Leamington Spa, England.

**Beschreibung**

Die Erfindung bezieht sich auf ein Kompressorventil, bestehend aus einem Ventilsitz, in dem Durchgangskanäle für das gesteuerte Medium vorgesehen sind, einem in einem Abstand vom Ventilsitz angeordneten Fänger und einer Ventilplatte, die über den Durchgangskanälen zwischen dem Ventilsitz und dem Fänger hin- und hergehend bewegbar ist, wobei auf dem Ventilsitz eine Dichtfläche und im Abstand vom Ventilsitz eine Anschlagfläche für die Ventilplatte vorgesehen ist.

Bei den Kompressorventilen werden bekanntlich die zwischen dem Ventilsitz und dem Fänger angeordneten Platten im Hubtakt des Verdichters hin- und hergehend bewegt, wobei sie mit verhältnismäßig großen Geschwindigkeiten auf den Fänger und auf den Ventilsitz aufschlagen. Am stärksten beansprucht ist die Ventilplatte, die sich unmittelbar über dem Ventilsitz befindet und die Durchgangskanäle desselben steuert. Die Öffnungsbewegung der Platten und insbesondere der Ventilplatte wird durch am Fänger abgestützte Federn und durch eigene, für diesen Zweck vorgesehene Dämpferplatten gedämpft. Die größte Beanspruchung der Ventilplatte tritt aber bei der Schließbewegung auf, weil zwischen die Ventilplatte und die Dichtfläche des Ventilsitzes nicht ohne weiteres Dämpferplatten od.dgl. dazwischengeschaltet werden können.

Die sogenannten Schließschläge beim Auftreffen der Ventilplatte auf dem Ventilsitz hängen in erheblichem Ausmaß von der Geschwindigkeit ab, mit der die Ventilplatte auf der Dichtfläche des Ventilsitzes aufschlägt. Um zu harte Aufschläge zu vermeiden und eine Verschlechterung des Wirkungsgrades des Verdichters zu verhindern, ist es wichtig, daß die Ventilplatte, z.B. des Druckventils, beim Kompressionshub des Kompressors möglichst frühzeitig die Durchgangskanäle des Ventilsitzes öffnet, sobald der Druck im Zylinder des Kompressors den Druck in der Druckleitung übersteigt, und daß die Durchgangskanäle möglichst frühzeitig wieder geschlossen werden, sobald der Verdichtungshub des Kompressors beendet ist. Die auf die Ventilplatte wirkenden, am Fänger abgestützten Schließfedern des Ventils dämpfen nicht nur die Öffnungsbewegung, sondern sie haben auch die Aufgabe, die Schließbewegung rechtzeitig einzuleiten.

In der Praxis sammelt sich in vielen Fällen, insbesondere bei mit Öl geschmierten Kompressoren und in Kältekompressoren, zwischen der Anschlagfläche des Fängers und den einzelnen Platten des Ventils zeitweise Flüssigkeit an, die zur Folge hat, daß die einzelnen Platten aneinander und an der Anschlagfläche des Fängers haften. Durch diesen Klebeeffekt werden die Platten am Fänger zurückgehalten, bis das durch die Durchgangskanäle des Ventils in umgekehrter Richtung zurückströmende Medium ausreichend große Strömungskräfte auf die Platten ausübt, um diese vom Fänger und voneinander zu lösen. Dadurch wird der Schließvorgang der Ventilplatte verspätet eingeleitet und verzögert, so daß die Ventilplatte anschließend durch die dann schon großen Strömungskräfte erheblich beschleunigt wird und beim Auftreffen auf den Ventilsitz erhöhten Schlagbeanspruchungen ausgesetzt wird. Da aufgrund des Spätschlusses ein Teil des gesteuerten Mediums in verkehrter Richtung durch das Ventil zurückströmt, wird auch die Förderleistung des Verdichters verringert, was einen weiteren Nachteil darstellt.

In der US-A-402 647 ist ein Pumpenventil mit den eingangs angeführten Merkmalen beschrieben. Die Ventilplatte ist dort mit ringförmigen, gegen den Fänger ragenden wellenförmigen Erhebungen ausgebildet. Die Anschlagfläche des Fängers ist dazu als Gegenstück mit zu den wellenförmigen Erhebungen passenden Ausnehmungen ausgebildet, so daß bei offenem Ventil die wellenförmigen Erhebungen in die ihnen zugeordneten Ausnehmungen weitgehend spielfrei eingreifen. Bei diesem Eingreifen verdrängen die Erhebungen der Ventilplatte die Flüssigkeit aus den Ausnehmungen des Fängers, wodurch die Aufschläge der Ventilplatte auf dem Fänger gedämpft werden sollen. Zum Dämpfen der Aufschläge der Ventilplatte auf dem Ventilsitz ist an der Peripherie des Ventils eine wellenförmige Erhebung in der Ventilplatte vorgesehen, aus der beim Aufschlagen auf dem Ventilsitz gleichfalls die Flüssigkeit verdrängt wird. In beiden Fällen erfolgt somit die Aufschlagsdämpfung dadurch, daß beim Auftreffen der Ventilplatte auf ihre Anschlagfläche in Räumen weitgehend eingeschlossene Flüssigkeit durch die Ventilplatte verdrängt wird. Dies hat aber gerade zur Folge, daß die verbleibende Flüssigkeit die wellenförmigen Erhebungen der Ventilplatte in den Ausnehmungen eng umschließt, wodurch ein Klebeeffekt auftritt, der die Ventilplatte in der offenen Stellung festhält. Dadurch wird die Schließbewegung der Ventilplatte verzögert und verspätet eingeleitet, was zu den geschilderten nachteiligen Folgen, insbesondere zu einem harten Aufschlagen der Ventilplatte auf dem Ventilsitz führt.

Aus der US-A-3 703 912 ist ein Ventil der eingangs angeführten Bauart bekannt, bei dem zwischen der Ventilplatte und dem Fänger eine Dämpferplatte angeordnet ist, auf die die Ventilplatte bei ihrer Öffnungsbewegung auftrifft, wodurch ihre Geschwindigkeit verringert und das Aufschlagen beider Platten auf dem Fänger gedämpft wird. Bei offenem Ventil liegt die Ventilplatte dabei nicht unmittelbar auf der Anschlagfläche des Fängers, sondern auf der Anschlagfläche der Dämpferplatte auf. Die aufeinander aufliegenden Anschlagflächen sind bei dieser Ausführung eben, so daß es zu dem beschriebenen Haften der Ventilplatte an ihrer Anschlagfläche und zu den nachteiligen Spätschlüssen des Ventils kommen kann, insbesondere wenn Öl oder eine andere Flüssigkeit zwischen die Platten gelangt ist.

Der Erfindung liegt die Aufgabe zugrunde, die bisher bekannten Kompressorventile zu verbessern und das Ventil sowie seine beweglichen Bestandteile so auszubilden, daß sie möglichst wenig aneinander haften und Verzögerungen der Schließbewegung durch im Ventil vorhandene Flüssigkeiten wie Öl oder Kältemittel, was bekanntlich harte Aufschläge der Ventilplatte auf dem Ventilsitz verursacht, vermieden werden.

Diese Aufgabe wird bei einem Kompressorventil der eingangs angeführten Bauart erfindungsgemäß dadurch gelöst, daß die Ventilplatte auf ihrer Seite, die mit der ihr zugeordneten Anschlagfläche zusammenwirkt, oder die Anschlagfläche selbst, mit über die Fläche der Ventilplatte verteilten Vorsprüngen versehen ist, die vom Profil der zugeordneten anderen Fläche abweichen, wobei die Ventilplatte die ihr zugeordnete Anschlagfläche nur stellenweise im Bereich der Vorsprünge berührt, und daß zwischen den Vorsprüngen kanalartige Vertiefungen vorgesehen sind, die sich wenigstens an einigen Stellen der Ventilplatte bis an deren Ränder erstrecken und dort frei münden. Die Ventilplatte, die aus einzelnen Ringen, einer Scheibe oder aus durch Stege verbundenen Plattenringen bestehen kann, liegt bei dieser Ausbildung bei offenem Ventil nicht über ihreganze Fläche, sondern lediglich über die Vorsprünge an der Anschlagfläche an. Die Ausnehmungen um die Vorsprünge herum bilden Kanäle, durch die allenfalls vorhandene Flüssigkeit frei abströmen kann. Dadurch wird verhindert, daß die Ventilplatte am Fänger haften bleibt und auf diese Weise eine verspätete Schließbewegung verursacht wird. Die Schließbewegung wird bei der erfindungsgemäßen Ausbildung rechtzeitig eingeleitet, bevor eine nachteilige Rückströmung von Medium durch das Ventil erfolgt, wodurch harte Aufschläge auf dem Ventilsitz ebenso vermieden werden wie eine Verringerung der Förderleistung des Verdichters.

Die mit den Vorsprüngen versehene Anschlagfläche, an der die Ventilplatte bei offenem Ventil anliegt, kann vom Fänger selbst gebildet sein. Beim erfindungsgemäßen Ventil ist es auch möglich, zwischen der Ventilplatte und dem Fänger wenigstens eine weitere Platte im Ventil anzuordnen, z.B. eine Dämpferplatte, eine oder mehrere Federplatten, eine Lenkerplatte u.dgl., die bei offenem Ventil am Fänger anliegt und ihrerseits eine Anschlagfläche für die Ventilplatte bildet, wobei diese Anschlagfläche mit Vorsprüngen und dazwischen liegenden Vertiefungen versehen ist. Auch bei dieser Ausbildung ist es möglich, daß die Ventilplatte selbst höckerartige Vorsprünge aufweist, wobei die weitere Platte zwischen der Ventilplatte und dem Fänger auch eben sein kann.

In weiterer Ausgestaltung der Erfindung kann die weitere Platte auf ihrer dem Fänger zugewendeten Seite mit Vorsprüngen und dazwischen liegenden Vertiefungen versehen sein. Sie kann auch auf ihren beiden Seiten, die dem Fänger und bzw. oder der Ventilplatte zugewendet sind, Vorsprünge und dazwischen liegende Vertiefungen aufweisen. Mit diesen Vorsprüngen, die zweckmäßig aus Kunststoff bestehen, wird eine Dämpfung der Aufschläge beim Aufeinandertreffen der einzelnen Platten untereinander und auf die Aufschlagfläche des Fängers erreicht und gleichzeitig verhindert, daß die einzelnen Platten aneinander und am Fänger nachteilig haften.

Bei einer bevorzugten Auführungsform der Erfindung sind die Vorsprünge höckerartig ausgebildet und an ihren außenliegenden Enden, mit welchen sie auf die mit ihnen zusammenwirkende Fläche auftreffen, abgerundet. Auch diese Maßnahme dient zur Verbesserung der Aufschlagsdämpfung und zur Verringerung der Haftung, die bekanntlich am größten ist, wenn glatte, ebene Flächen aneinander anliegen.

Die Vertiefungen, die die einzelnen Vorsprünge von den benachbarten Vorsprüngen trennen, bilden Kanäle zum Ableiten der Flüssigkeit, so daß Festsaugeffekte verhindert werden. Wenn nach einem weiteren Merkmal der Erfindung in den kanalartigen Vertiefungen in Abständen voneinander angeordnete weitere Ausnehmungen vorgesehen sind, wird noch besser vermieden, daß auf der Oberfläche der Ventilplatte oder der zugehörigen Anschlagfläche ein durchgehender, geschlossener Flüssigkeitsspiegel entsteht. Die vorhandene Flüssigkeit sammelt sich zuerst in den Ausnehmungen, so daß daneben Querschnittsflächen der Vertiefungen frei bleiben, durch die das verdichtete gasförmige Medium zu- und die überschüssige Flüssigkeit abströmen kann.

Bei einer einfachen und zweckmäßigen Ausbildungsform der Erfindung sind die Vorsprünge in Reihen nebeneinander und hintereinander angeordnet.

Im Rahmen der Erfindung sind verschiedene weitere Ausbildungsvarianten der Vorsprünge mit dazwischen angeordneten Vertiefungen möglich, die alle das Aneinanderhaften der Ventilteile verhindern. So können die Vorsprünge und die zwischen diesen angeordneten Vertiefungen parallel zueinander quer über die Ventilplatte oder über die mit dieser zusammenwirkende Anschlagfläche verlaufen. Sie können sich aber auch radial über die Ventilplatte oder über die mit dieser zusammenwirkende Anschlagfläche erstrecken. Eine weitere Ausführung besteht darin, daß die Vorsprünge und die zwischen diesen angeordneten Vertiefungen durch wellenförmige Ausbildung einer zwischen der Ventilplatte und der Anschlagfläche des Fängers vorgesehene zusätzliche Platte gebildet sind.

Nach einem weiteren Merkmal der Erfindung können die Vorsprünge wenigstens teilweise aus Kunststoff bestehen. Sie sind dadurch einfach herstellbar und besitzen günstige Dämpfungseigenschaften. Weiterhin können die Vorsprünge aus wehrartigen Rippen bestehen, die im Abstand voneinander konzentrisch zur Ventilachse vorgesehen sind. Die als wehrartigen Rippen ausgebildeten Vorsprünge können die Durchtrittsschlitze in der Ventilplatte oder in einer zusätzlichen Platte, oder aber Abströmöffnungen im Fänger umgeben und von nach außen führenden Entlastungskanälen durchbrochen sind. Schließlich können die Vorsprünge und die zwischen diesen angeordneten Vertiefungen durch Prägen eines Musters oder durch Gießen hergestellt sein.

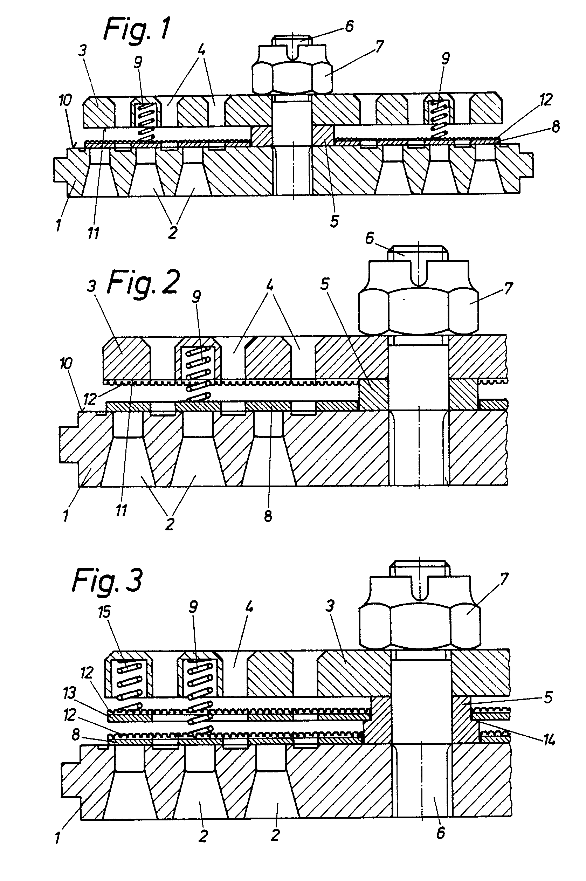

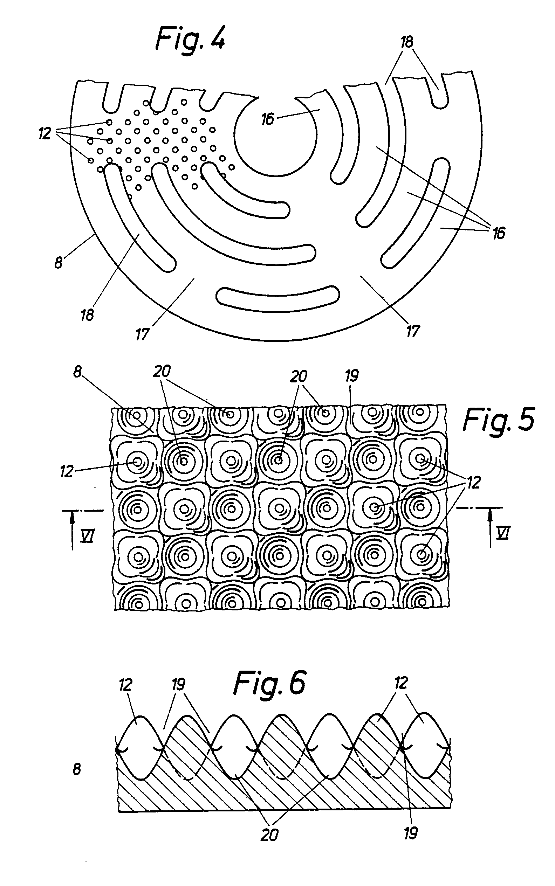

Weitere Einzelheiten und Vorteile der Erfindung sind aus der nachfolgenden Beschreibung von Ausführungsbeispielen zu entnehmen, die in den Zeichnungen dargestellt sind. In diesen zeigt Fig. 1 eine bevorzugte Ausführungsform des erfindungsgemäßen Kompressorventils im axialen Mittelschnitt. Die Fig. 2 und 3 zeigen zwei weitere Ausführungsformen in größerem Maßstab, wobei nur die eine Hälfte des Ventils dargestellt ist. In Fig. 4 ist die Ventilplatte in Draufsicht gezeigt und die Fig. 5 und 6 sind ein vergrößerter Ausschnitt aus der Ventilplatte nach Fig. 4 in Draufsicht und im Querschnitt nach der Linie VI—VI in Fig. 5.

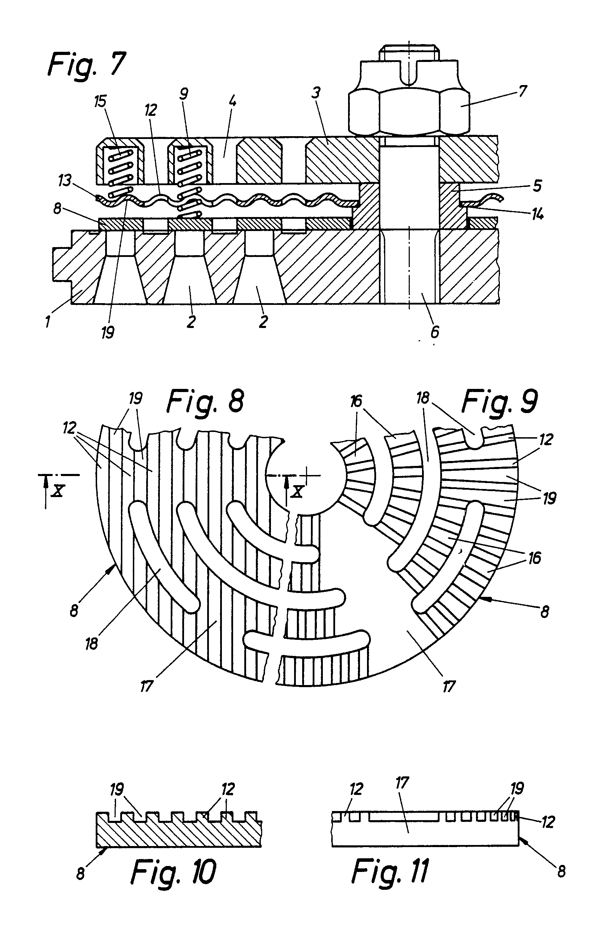

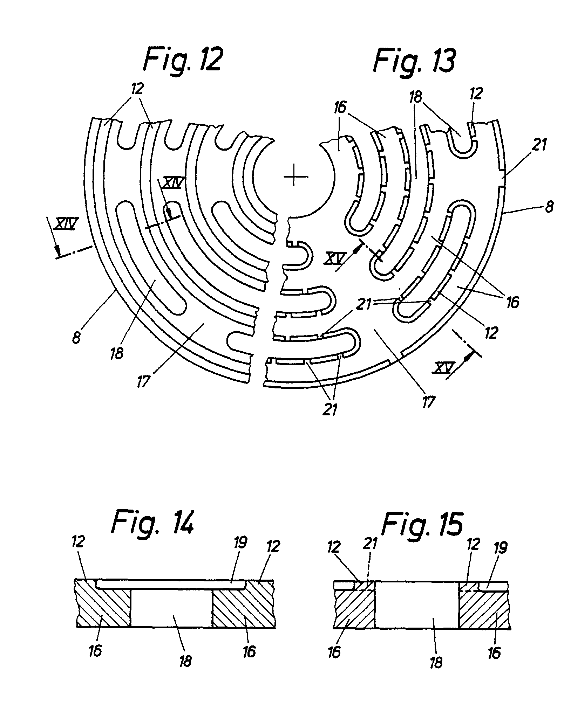

Fig. 7 zeigt einen axialen Mittelschnitt durch ein weiteres Ausführungsbeispiel der Erfindung, die Fig. 8 und 9 zeigen Ausschnitte der Ventilplatte von zwei weiteren Varianten in Draufsicht, Fig. 10 einen Schnitt nach der Linie X—X in Fig. 8, Fig. 11 eine Seitenansicht der in Fig. 9 dargestellten Ventilplatte, die Fig. 12 und 13 zwei weitere Ausführungsvarianten der Ventilplatte in Draufsicht, Fig. 14 einen Schnitt nach der Linie XIV—XIV in Fig. 12 und Fig. 15 einen Schnitt nach der Linie XV—XV in Fig. 13, jeweils in größerem Maßstab.

In allen Ausführungsbeispielen besteht das dargestellte Kompressorventil aus einem Ventilsitz 1 mit Durchgangskanälen 2 für das gesteuerte Medium und einem Fänger 3, der Abströmöffnungen 4 aufweist und durch einen Führungsring 5 im Abstand vom Ventilsitz 1 angeordnet ist. Der Ventilsitz 1, der Fänger 3 und der Führungsring 5 sind durch eine zentrale Schraube 6 mit einer Mutter 7 fest miteinander verbunden. Im Zwischenraum zwischen dem Ventilsitz 1 und dem Fänger 3 befindet sich eine Ventilplatte 8, die durch im Fänger 3 abgestützte Schließfedern 9 gegen den Ventilsitz 1 belastet ist. Der Ventilsitz 1 hat eine Dichtfläche 10, auf der die Ventilplatte 8 bei geschlossenem Ventil aufliegt und die Durchgangskanäle 2 abschließt. Der Fänger 3 bildet einen Endanschlag für die Öffnungsbewegung der Ventilplatte 8 und ist für diesen Zweck mit einer Anschlagfläche 11 versehen. Die Ventilplatte 8 ist bei ihrer Hubbewegung am Außenmantel des Führungsringes 5 geführt und liegt bei offenem Ventil mit ihrer Oberseite an der Anschlagfläche 11 an.

Im Ausführungsbeispiel nach Fig. 1 ist die Seite der Ventilplatte 8, die mit der Anschlagfläche 11 des Fängers zusammenwirkt, mit über die Fläche der Ventilplatte 8 verteilten Vorsprüngen 12 versehen. Bei der Ausführung nach Fig. 2 sind die Vorsprünge dagegen auf der Anschlagfläche 11 des Fängers angeordnet, wobei die damit zusammenwirkende Oberseite der Ventilplatte 8 eben ausgebildet ist. Die Ventilplatte 8 kann in diesem Ausführungsbeispiel aus Kunststoff oder in herkömmlicher Weise auch zur Gänze aus Stahl bestehen. Das Ausführungsbeispiel nach Fig. 3 unterscheidet sich von den Ausführungen nach den Fig. 1 und 2 dadurch, daß eine weitere Platte, u.z.w. eine Dämpferplatte 13 vorgesehen ist, die parallel über der Ventilplatte 8 zwischen dieser und dem Fänger 3 liegt. Der Führungsring 5 ist mit einer Abstufung 14 versehen, auf der die Dämpferplatte 13 aufliegt, so daß sie in einem bestimmten Abstand vom Fänger 3 über der Ventilplatte 8 gehalten wird. Die Dämpferplatte 13 ist durch eigene Dämpferfedern 15 belastet. Bei der Öffnungsbewegung schlägt die Ventilplatte 8 mit ihrer Oberseite zunächst an der Dämpferplatte 13 an und bewegt sich sodann gemeinsam mit dieser gegen den Fänger 3, bis die Dämpferplatte 13 mit ihrer Oberseite auf den Fänger 3 auftrifft. Aus Fig. 3 ist zu erkennen, daß sowohl die Ventilplatte 8 als auch die Dämpferplatte 13 jeweils auf ihrer Oberseite mit Vorsprüngen 12 versehen ist.

In Fig. 4 ist eine Draufsicht auf die Ventilplatte 8 gezeigt, deren Oberseite mit den Vorsprüngen 12 bedeckt ist, die höckerartig ausgebildet sind. Die Ventilplatte 8 kann entweder zur Gänze aus Kunststoff bestehen oder zumindest an ihrer Oberseite mit einer Schicht oder Auflage aus Kunststoff versehen sein, welche die höckerartigen Vorsprünge 12 bildet. Diese sind, wie in Fig. 4 angedeutet ist, über die ganze Fläche der Ventilplatte 8 regelmäßig oder auch unregelmäßig in beliebiger Anordnung verteilt. Die Ventilplatte 6 besteht im Ausführungsbeispiel nach Fig. 4 aus vier konzentrischen Ringen 16, die durch radiale Stege 17 miteinander verbunden sind. Die Ventilplatte 8 kann aber auch aus einem einzigen Ring oder einer Scheibe bestehen. Mehrere Einzelringe können nebeneinander angeordnet sein. Zwischen den Ringen 16 und den Stegen 17 sind in der Ventilplatte 8 ringabschnittförmige Schlitze 18 für die Durchströmung des gesteuerten Mediums vorgesehen. Wenn die Ventilplatte 8 in ein Ventil z.B. nach Fig. 1 eingebaut ist, liegt der innerste Ring 16 mit seinem Innenrand am Außenmantel des Führungsringes 5 an, wodurch die Ventilplatte 8 auf dem Ventilsitz 1 zentriert und während der Hubbewegung geführt ist. Wie im Ventilbau allgemein bekannt ist, kann aber auch eine reibungsfreie Führung mit Hilfe von elastischen Lenkern vorgesehen sein.

Ein vorteilhaftes Ausführungsbeispiel der höckerartigen Vorsprünge 12 ist in den Fig. 5 und 6 vergrößert dargestellt. Die Vorsprünge 12 sind an ihrem außenliegenden Ende abgerundet, wie aus Fig. 6 hervorgeht. Zwischen den Vorsprüngen 12 sind Vertiefungen 19 vorhanden, die die benachbarten Vorsprünge 12 voneinander trennen. Stellenweise sind weitere Ausnehmungen 20 in den Vertiefungen 19 vorgesehen.

Im Ausführungsbeispiel nach Fig. 7 ist, ähnlich wie bei der Ausführung nach Fig. 3, zwischen der Ventilplatte 8 und dem Fänger 3 eine weitere Platte 13 vorgesehen, z.B. eine Dämpferplatte. Diese weitere Platte 13 ist wellenförmig ausgebildet, wodurch gleichfalls Vorsprünge 12, die Wellenberge, und dazwischen Vertiefungen 19, die Wellentäler, entstehen. Mit dieser Ausbildung wird erreicht, daß bei offenem Ventil alle Berührungsflächen zwischen den beiden Platten 8 und 13 und dem Fänger 3 nicht durchgehend ausgebildet sind, sondern durch abwechselnde Vorsprünge 12 und Vertiefungen 19 unterbrochen sind. Die wellenförmige Ausbildung der weiteren Platte 13 ist auf verschiedene Weise möglich. Die Wellen, welche die Vorsprünge 12 bilden, können parallel zueinander geradlinig über die Platte verlaufen, sie können konzentrisch um die Ventilachse herum vorgesehen sein oder auch sich in radialer Richtung erstrecken. Auch unregelmäßige Anordnungen, unregelmäßig geformte und ungleich große Wellen sind denkbar.

Auch mit den Ausbildungen nach den Fig. 8 bis 11 werden die Berührungsflächen unterbrochen. Gemäß Fig. 8 sind die Vorsprünge 12 rippenförmig ausgebildet, wobei die Vertiefungen 19 zwischen den rippenförmigen Vorsprüngen 12 verlaufende Kanäle bilden. Die Vorsprünge 12 erstrecken sich parallel nebeneinander über die ganze Fläche der Ventilplatte 8. Bei der Ausführung nach Fig. 9 sind die Vorsprünge 12 radial zur Ventilplatte 8 angeordnet. Jeder Ring 16 der Ventilplatte 8 ist unabhängig von den anderen Ringen 16 mit ungefähr radial verlaufenden Vorsprüngen 12 versehen. Sowohl die Vorsprünge 12 als auch die Vertiefungen 19 können verschieden breit sein. Im Bereich der über mehrere Ringe 16 durchgehenden radialen Stege sind im Ausführungsbeispiel keine Vorsprünge 12 vorgesehen. Die so vorhandene ebene Fläche kann für die Auflage von Federn dienen. Im übrigen ist jede beliebige Anordnung und Verteilung der rippenförmigen Vorsprünge 12 über die Fläche der Ventilplatte 8 möglich. Die Fig. 10 und 11 zeigen die Formgebung der jeweils abwechselnden Vorsprünge 12 und Vertiefungen 19.

Bei der Ausführung nach Fig. 12 sind die Vorsprünge 12 konzentrisch über die Ventilplatte 8 verteilte Rippen, die jeweils im Bereich der Ringe 16 der Ventilplatte 8 verlaufen. Fig. 13 zeigt dagegen eine Ausführung, bei der die Vorsprünge 12 wehrartige Rippen um die Schlitze 18 der Ventilplatte 8 herum bilden. Die Vertiefungen 19 liegen dabei jeweils zwischen den Vorsprüngen 12, wie die Fig. 14 und 15 jeweils im Schnitt durch den Bereich eines Schlitzes 18 zeigen. Um zu verhindern, daß die Vertiefungen (19) bei offenem Ventil abgeschlossene Räume oder Wannen bilden, in denen sich Flüssigkeit ansammeln kann, sind Entlastungskanäle 21 an mehreren Stellen der rippenförmigen Vorsprünge 12 angeordnet, die eine Verbindung nach außen herstellen. Auch die Entlastungskanäle können den jeweiligen Anforderungen entsprechend in beliebiger Anzahl, in beliebiger Querschnittsgröße und an beliebigen Stellen der Ventilplatte 8 vorgesehen sein.

Die beschriebenen Ausführungsformen der Vorsprünge 12 mit dazwischen angeordneten kanalartigen Vertiefungen 19 können an allen Flächen des Ventils vorgesehen werden, die bei offenem Ventil aneinander anliegen, insbesondere an der dem Fänger 3 zugekehrten Fläche der Ventilplatte 8, an der Anschlagfläche 11 des Fängers 3 und auf beiden Seiten der weiteren Platte 13, wenn eine solche vorgesehen ist. Die rippenförmigen Vorsprünge und die Vertiefungen können auch in sich beliebig schneidender Anordnung vorgesehen sein. Sie können durch Prägen, Fräsen oder, insbesondere wenn sie aus Kunststoff bestehen, auch durch einen Gießvorgang hergestellt werden.

Aus den Zeichnungen geht hervor, daß die beweglichen Platten des dargestellten Ventils, die Ventilplatte 8 und die in den Fig. 3 und 7 zusätzlich vorgesehene Dämpferplatte 13, bei offenem Ventil an der Anschlagfläche des Fängers 11 und auch untereinander jeweils über eine Fläche anliegen, auf der Vorsprünge 12 mit dazwischen liegenden Vertiefungen 19 angeordnet sind. Diese Vorsprünge 12 verhindern, daß sich die Ventilplatte 8 an einer Anschlagfläche festsaugt, wenn sich Flüssigkeit im Ventil befindet, z.B. Schmiermittel oder im Falle eines Kältekompressors ein kondensiertes Kältemittel. Die Flüssigkeit kann aufgrund der Vorsprünge 12 in den kanalartigen Vertiefungen 19 um diese herum abfließen, wodurch ein Festhaften vermieden wird. Kleinere Flüssigkeitsmengen können sich in den Ausnehmungen 20 sammeln. In allen Fällen kann das gesteuerte Gas durch die von den Vertiefungen 19 gebildeten Kanäle hindurch zwischen die jeweilige Anschlagfläche und die Ventilplatte 8 eindringen, so daß die Ventilplatte auch unter Einwirkung der Schließfedern 9 stets rechtzeitig vom Fänger 3 gelöst und auf den Ventilsitz 1 zurückbewegt wird. Auf diese Weise wird verhindert, daß durch das Ventil zurückströmendes Medium die Schließkraft auf die Ventilplatte 8 verstärkt und harte Aufschläge auf dem Ventilsitz 1 verursacht. Außerdem wird ein nachteiliges Zurückströmen von Medium in der verkehrten Richtung durch das Ventil verhindert, so daß eine Verringerung der Förderleistung durch verspätetes Schließen des Ventils vermieden wird.

## Patentansprüche

1. Kompressorventil bestehend aus einem Ventilsitz (1), in dem Durchgangskanäle (2) für das gesteuerte Medium vorgesehen sind, einem in einem Abstand vom Ventilsitz (1) angeordneten Fänger (3) und einer Ventilplatte (8), die über den Durchgangskanälen (2) zwischen dem Ventilsitz und dem Fänger (3) hin- und hergehend bewegbar ist, wobei auf dem Ventilsitz (1) eine Dichtfläche (10) und im Abstand vom Ventilsitz (1) eine Anschlagfläche (11) für die Ventilplatte (8) vorgesehen ist, dadurch gekennzeichnet, daß die Ventilplatte (8) auf ihrer Seite, die mit der ihr zugeordneten Anschlagfläche zusammenwirkt, oder die Anschlagfläche (11) selbst, mit über die Fläche der Ventilplatte (8) verteilten Vorsprüngen (12) versehen ist, die vom Profil der zugeordneten anderen Fläche (8, 11) abweichen, wobei die Ventilplatte (8) die ihr zugeordnete Anschlagfläche (11) nur stellenweise im Bereich der Vorsprünge (12) berührt, und daß zwischen den Vorsprüngen (12) kanalartige Vertiefungen (19) vorgesehen sind, die sich wenigstens an einigen Stellen der Ventilplatte (8) bis an deren Ränder erstrecken und dort frei münden.

2. Ventil nach Anspruch 1, dadurch gekennzeichnet, daß die mit den Vorsprüngen (12) versehene Anschlagfläche (11) vom Fänger (3) gebildet ist.

3. Ventil nach Anspruch 1, dadurch gekennzeichnet, daß zwischen der Ventilplatte (8) und dem Fänger (3) wenigstens eine weitere Platte (13) im Ventil angeordnet ist, die bei offenem Ventil am Fänger (3) anliegt und ihrerseits eine Anschlagfläche (11) für die Ventilplatte (8) bildet, wobei diese Anschlagfläche (11) mit Vorsprüngen (12) und dazwischen liegenden Vertiefungen (19) versehen ist.

4. Ventil nach Anspruch 3, dadurch gekennzeichnet, daß die weitere Platte (13) auf ihrer dem Fänger (3) zugewendeten Seite mit Vorsprüngen (12) und dazwischen liegenden Vertiefungen (19) versehen ist.

5. Ventil nach Anspruch 3, dadurch gekennzeichnet, daß die weitere Platte (13) auf ihren beiden Seiten, die dem Fänger (3) oder der Ventilplatte (8) zugewendet sind, Vorsprünge (12) und dazwischen liegende Vertiefungen (19) aufweist.

6. Ventil nach Anspruch 1, dadurch gekennzeichnet, daß die Vorsprünge (12) höckerartig ausgebildet und an ihren außenliegenden Enden, mit welchen sie auf die mit ihnen zusammenwirkende Fläche auftreffen, abgerundet sind.

7. Ventil nach Anspruch 1, dadurch gekennzeichnet, daß in den kanalartigen Vertiefungen (19), die die Vorsprünge (12) von den benachbarten Vorsprüngen (12) trennen, in Abständen voneinander angeordnete weitere Ausnehmungen (20) vorgesehen sind.

8. Ventil nach Anspruch 1, dadurch gekennzeichnet, daß die Vorsprünge (12) in Reihen nebeneinander und hintereinander angeordnet sind.

9. Ventil nach Anspruch 1, dadurch gekennzeichnet, daß die Vorsprünge (12) und die zwischen diesen angeordneten Vertiefungen (19) parallel zueinander quer über die Ventilplatte (8) oder über die mit dieser zusammenwirkende Anschlagfläche (11) verlaufen.

10. Ventil nach Anspruch 1, dadurch gekennzeichnet, daß die Vorsprünge (12) und die zwischen diesen angeordneten Vertiefungen (19) radial über die Ventilplatte (8) oder über die mit dieser zusammenwirkende Anschlagfläche (11) verlaufen.

11. Ventil nach Anspruch 1, dadurch gekennzeichnet, daß die Vorsprünge (12) und die zwischen diesen angeordneten Vertiefungen (19) durch wellenförmige Ausbildung einer zwischen der Ventilplatte (8) und der Anschlagfläche (11) des Fängers (3) vorgesehene zusätzliche Platte (13) gebildet sind.

12. Ventil nach Anspruch 1, dadurch gekennzeichnet, daß die Vorsprünge (12) wenigstens teilweise aus Kunststoff bestehen.

13. Ventil nach Anspruch 1, dadurch gekennzeichnet, daß die Vorsprünge (12) aus wehrartigen Rippen bestehen, die im Abstand voneinander konzentrisch zur Ventilachse vorgesehen sind.

14. Ventil nach Anspruch 1, dadurch gekennzeichnet, daß die Vorsprünge (12) aus wehrartigen Rippen bestehen, die Durchtrittsschlitze (18) in der Ventilplatte (8) oder in einer zusätzlichen Platte (13), oder aber Abströmöffnungen (4) im Fänger (3) umgeben und von nach außen führenden Entlastungskanälen (21) durchbrochen sind.

15. Ventil nach Anspruch 1, dadurch gekennzeichnet, daß die Vorsprünge (12) und die zwischen diesen angeordneten Vertiefungen (19) durch Prägen eines Musters oder durch Gießen hergestellt sind.

**Revendications**

1. Soupape de compresseur composée d'un siège de soupape (1) dans lequel sont ménagées des lumières de passage (2) du fluide contrôlé, d'un arrêtoir (3) disposé à une certaine distance du siège de soupape (1) et d'une lame de soupape (8) pouvant aller et venir au-dessus des lumières de passage (2) entre le siège de soupape (1) et l'arrêtoir (3), une surface d'étanchéité (10) étant prévue sur le siège de soupape (1) et une surface de butée (11) de la lame de soupape (8) à une certaine distance du siège de soupape (1), caractérisée en ce que la lame de soupape (8), sur la face qui vient contre la surface de butée qui lui correspond, ou encore la surface de butée (11) elle-même, porte des saillies (12) réparties sur la surface de la lame de soupape (8) et différant du profil de l'autre surface conjuguée (8, 11), si bien que la lame de soupape (8) ne touche la surface de butée correspondante (11) que ponctuellement au niveau des saillies (12), et en ce que, entre les saillies (12), existent des creux (19) en forme de canaux qui s'étendent au moins à certains endroits de la lame de soupape (8) jusqu'aux bords de celle-ci pour y déboucher librement.

2. Soupape selon la revendication 1, caractérisée en ce que la surface de butée (11) dotée de saillies (12) est constituée par l'arrêtoir (3).

3. Soupape selon la revendication 1, caractérisée en ce qu'il existe dans la soupape entre la lame de soupape (8) et l'arrêtoir (3) au moins une autre lame (13) qui, dans la position d'ouverture de la soupape, repose contre l'arrêtoir (3) et forme elle-même une surface de butée (11) pour la lame de soupape (8), cette surface de butée (11) portant des saillies (12) et entre celles-ci des creux (19).

4. Soupape selon la revendication 3, caractérisée en ce que la seconde lame (13), sur sa face tournée vers l'arrêtoir (3), porte des saillies (12) et entre celles-ci des creux (19).

5. Soupape selon la revendication 3, caractérisée en ce que la seconde lame (13) porte sur ses deux faces, tournées vers l'arrêtoir (3) et la lame de soupape (8) respectivement, des saillies (12) et entre celles-ci des creux (19).

6. Soupape selon la revendication 1, caractérisée en ce que les saillies (12) sont en forme de bosses et sont arrondies à leur extrémité extérieure entrant en contact avec la surface conjuguée.

7. Soupape selon la revendication 1, caractérisée en ce que sont ménagés de nouveaux décrochements (20) dans les creux (19) en forme de canaux qui séparent les saillies (12) de leurs voisines.

8. Soupape selon la revendication 1, caractérisée en ce que les saillies (12) sont juxtaposées et alignées en rangées.

9. Soupape selon la revendication 1, caractérisée en ce que les saillies (12) et les creux (19) situées entre celles-ci sont disposés parallèlement en travers de la lame de soupape (8) ou de la surface de butée (11) conjuguée à celle-ci.

10. Soupape selon la revendication 1, caractérisée en ce que les saillies (12) et les creux (19) situés entre celles-ci sont disposés radialement sur la lame de soupape (8) ou sur la surface de butée (11) conjuguée à celle-ci.

11. Soupape selon la revendication 1, caractérisée en ce que les saillies (12) et les creux (19) situés entre celles-ci sont formés par les ondulations d'une seconde lame (13) disposée entre la lame de soupape (8) et la surface de butée (11) de l'arrêtoir (3).

12. Soupape selon la revendication 1, caractérisée en ce que les saillies (12) se composent au moins partiellement de matière plastique.

13. Soupape selon la revendication 1, caractérisée en ce que les saillies (12) sont formées par des nervures en forme de barrage écartées les unes des autres et disposées concentriquement à l'axe de la soupape.

14. Soupape selon la revendication 1, caractérisée en ce que les saillies (12) sont formées par des nervures en forme de barrage entourant les fentes de passage (18) dans la lame de soupape (8) ou dans une seconde lame (13) ou encore dans des ouvertures d'écoulement (4) de l'arrêtoir (3) et sont traversées par des canaux de décharge (21) débouchant à l'extérieur.

15. Soupape selon la revendication 1, caractérisée en ce que les saillies (12) et les creux situés entre celles-ci sont produites par estampage d'un motif ou par moulage.

**Claims**

1. Compressor valve consisting of a valve seat (1) in which throughflow channels (2) are provided for the controlled medium, of a valve guard (3) arranged spaced apart from the valve seat (1), and of a valve plate (8) which is movable to and fro over the throughflow channels (2) between the valve seat and the valve guard (3); wherein there is provided on the valve seat (1) a sealing surface (10), and a stop face (11) spaced apart from the valve seat (1), for the valve plate (8), characterised in that the valve plate (8) is provided, on its side which co-operates with the stop face with which it is associated — or else the stop face (11) itself is provided — with projections (12) which are distributed over the surface of the valve plate (8) and which are different from the profile of the associated other surface (8, 11), the valve plate (8) only touching the stop face (11), with which it is associated, here and there in the region of the projections (12); and in that between the projections (12) there are provided channel-like recesses (19) which extend, at least on certain places of the valve plate (8), to as far as the edges thereof, opening out freely there.

2. Valve according to claim 1, characterised in that the stop face (11) which is provided with the projections (12) is formed by the valve guard (3).

3. Valve according to claim 1, characterised in that between the valve plate (8) and the valve guard (3) there is arranged in the valve at least one further plate (13) which when the valve is open, bears on the valve guard (3) and forms in its turn a stop face (11) for the valve plate (8), this stop face (11) being provided with projections (12) and with recesses (19) lying therebetween.

4. Valve according to claim 3, characterised in that the further plate (13) is provided on its side which faces towards the valve guard (3) with projections (12) and with recesses (19) lying therebetween.

5. Valve according to claim 3, characterised in that the further plate (13) has, on both its sides which face towards the valve guard (3) or towards the valve plate (8), projections (12) and recesses (19) lying therebetween.

6. Valve according to claim 1, characterised in that the projections (12) are constructed in the form of bumps and are rounded at their externally located ends wherewith they impact upon the face which is co-operating with them.

7. Valve according to claim 1, characterised in that further hollows (20), arranged spaced apart from one another, are provided in the channel-like recesses (19) which separate the projections (12) from the adjacent projections (12).

8. Valve according to claim 1, characterised in that the projections (12) are arranged in rows adjacent to one another and one behind the other.

9. Valve according to claim 1, characterised in that the projections (12) and the recesses (19) arranged therebetween extend parallel to one another, transversely over the valve plate (8) or over the stop face (11) co-operating therewith.

10. Valve according to claim 1, characterised in that the projections (12) and the recesses (19) arranged therebetween extend radially over the valve plate (8) or over the stop face (11) co-operating therewith.

11. Valve according to claim 1, characterised in that the projections (12) and the recesses (19) arranged therebetween are formed by the undulating configuration of an additional plate (13) which is provided between the valve plate (8) and the stop face (11) of the valve guard (3).

12. Valve according to claim 1, characterised in that the projections (12) are at least partially made of synthetic plastics material.

13. Valve according to claim 1, characterised in that the projections (12) consist of ribs which resemble reinforcing means and which are provided spaced apart from one another concentrically to the valve axis.

14. Valve according to claim 1, characterised in that the projections (12) consist of ribs which resemble reinforcing means and which surround throughpassage slots (18) in the valve plate (8) or in an additional plate (13), or else surround outflow openings (4) in the valve guard (3), and are pierced through by discharge channels (21) which lead towards the outside.

15. Valve according to claim 1, characterised in that the projections (12) and the recesses (19) arranged therebetween are manufactured by stamping a pattern, or by casting.

8

*Fig. 1*

*Fig. 2*

*Fig. 3*

*Fig. 4*

*Fig. 5*

*Fig. 6*

## Fig. 7

## Fig. 8

## Fig. 9

## Fig. 10

## Fig. 11

## Fig. 12

## Fig. 13

## Fig. 14

## Fig. 15